# EUROPEAN PATENT SPECIFICATION

(11) **EP 1 592 837 B1**
(45) Date of publication and mention of the grant of the patent: **03.04.2013**
(21) Application number: 04706245.0
(22) Date of filing: 29.01.2004
(51) Int. Cl.: D06M 15/39, D06M 15/41, D06P 1/56, D06P 5/08, C08G 8/04, D06L 3/10, C08G 8/28, B41M 5/30, B41M 5/333

(54) **NON-YELLOWING ALDEHYDE CONDENSATION PRODUCTS**
NICHT VERGILBENDE ALDEHYDKONDENSATIONSPRODUKTE
PRODUITS DE CONDENSATION ALDEHYDE NE JAUNISSANT PAS

(30) Priority: 31.01.2003 EP 03002206
(43) Date of publication of application: 09.11.2005
(73) Proprietor: Clariant Finance (BVI) Limited, Road Town, Tortola (VG)
(72) Inventor: STUMPF, Martin, 79639 Grenzach-Wyhlen (DE)
(74) Representative: Jacobi, Carola
(86) International application number: PCT/IB2004/000288
(87) International publication number: WO 2004/067831

(56) References cited:
- DE-A- 3 446 922
- DE-A- 4 401 390

## Description

The invention relates to a storage-stable and non-yellowing dyeing auxiliary which provides excellent fixation in the dyeing or optical brightening of nitrogenous fibre materials and which comprises an aldehyde condensation product of 4,4'-dihydroxydiphenil sulfones or phenol and a stabilizing reductan which reductant is ascorbicacid or is ascorbic acid.

When nitrogenous fibre materials such as natural or synthetic polyamide fibre materials, (for example wool and/or polyamides especially polyamide microfibres), are dyed or optically brightened, fixing improves the fastnesses of the dyeings and prints.

The disadvantage with an aldehyde condensation product fixative is the yellowing of the dyed goods or the fact that the fixative will yellow even before it is used. This yellowing may even occur under normal storage conditions e.g. at ambient temperature.

DE3446922 relates to the reductive cleaning of polyester/cellulose fibre textile blends, which have been dyed continuously with disperse dyes, in the presence of dispersants based on water-soluble ammonium or amine salts of synthetic polycondensation products containing sulpho groups.

DE4401390 (US5672674) relates to an anti-stain finish treatment for polyamide-containing fibre materials by treating these textile materials with a sulpho-containing aromatic formaldehyde condensation product in combination with polyacrylic acid, the treatment with the two components being carried out in any desired order or simultaneously.

It is an object of the present invention to provide a dyeing fixative which does not have these disadvantages, i.e. does not noticeably yellow, if at all. It is a further object of the invention to provide a storage stable, effective, acid-stable fixative useful for fixing of dyeings or prints on polyamide, especially on polyamide microfibers and polyamide blends with elastane. Moreover, the treated substrate should not markedly yellow, if at all.

It has now been found that the compositions of the invention do not yellow or do not yellow as quickly when the compositions of the invention comprises a sulfonation-solubilized aldehyde condensation product with a hydroxyl-containing aromatic body, also comprising a stabilizing reductant.

It has further been found that similarly the substrates treated with the compositions of the invention do not yellow or do not yellow as quickly when the compositions of the invention comprise a sulfonation-solubilized aldehyde condensation product with a hydroxyl-containing aromatic body, also comprising a stabilizing reductant.

A further aspect of the present invention is to provide a process for producing the non-yellowing and storage-stable dyeing fixative which does not markedly yellow, if at all. Still a further aspect of the present invention relates to a composition obtainable by a process according to the invention.

The instant invention, thus, pertains to a storage-stable and non-yellowing composition in terms of claim 1, whereby its preferred embodiment is defined in claim 2. The invention further pertains to a process for preparing the storage-stable and non-yellowing composition accoring to claim 3 and its preferred embodiment in terms of claims 3 and 5.

Preference is given according to the invention to 4,4'-dihydroxydiphenyl sulphones and phenol itself.

The most important aldehyde component is formaldehyde in a wide range of supply forms (aqueous solutions, paraldehyde, formaldehyde-detaching compounds such as hexamethylenetetramine for example). Other aldehydes or else ketones may in principle also be used as a carbonyl component.

Condensation reactions of phenols with aldehydes (formaldehyde) give rise to unmodified phenolic resins which, depending on the molar ratios of the reactants, the reaction conditions and the catalysts used, lead to so-called novolacs (condensation under acidic conditions) and resoles (condensation under alkaline conditions).

Preference is given to those aldehyde condensation products which were prepared under acidic conditions.

If the aldehyde condensation product with a hydroxyl-containing aromatic body are to be sulphonated, the sulphonation of the aromatic body can take place under customary sulphonating conditions, preferably by using oleum, 100% sulphuric acid, concentrated sulphuric acid or chlorosulphonic acid. It may be advantageous to carry out the sulphonation in the temperature range from room temperature (= 20°C) to 150°C, preferably 70 to 135°C. In the case of the, particularly preferred sulphonation using 100% or concentrated sulphuric acid, it is possible if desired to proceed under such conditions that water of reaction is withdrawn, (for example distilled off or evaporated off under reduced pressure if appropriate). The sulphonation is advantageously carried out under such conditions that on average 0.1 to 2 and advantageously 0.2 to 1.5 sulpho groups are introduced per molecule of the aromatic body, advantageously using 0.12 to 2.5 mol and preferably 0.25 to 1.75 mol of the sulphonating agent per mole of the aromatic body. In the case of the preferred sulphonation with 100% or concentrated sulphuric acid (i.e. especially H₂SO₄·H₂O to H₂SO₄), it is advantageous that water of reaction be distilled off under reduced pressure, to promote the further continuance of the sulphonation reaction and at the same time unsulphonated reactant can be distilled off as well and the sulphonation product achieves a degree of sulphonation of chiefly 0.15 to 2 and advantageously 0.25 to 1.5, among which products having an average degree of sulphonation in the range from 0.25 to 1.5 are particularly preferred. To prepare oligomeric sulphones of the aromatic body, the sulphonation product is advantageously allowed to react further until the desired degree of condensation to form the oligomeric sulphone is achieved. The condensation to form the sulphone is advantageously carried out at elevated temperature, preferably in the temperature range from 140 to 200°C and especially 150 to 180°C, under reduced pressure, advantageously below 50 mbar and more preferably below 20 mbar. This condensation to the sulphone is advantageously carried on until the decrease in the acid content of the condensation product ceases and the acid content is in the range from 250 to 450 and preferably 300 to 400 meq/100 g. Advantageously, excess sulphuric acid in the reaction mixture is not separated off, but the sulphuric acid mixture is directly used for condensation with the formaldehyde or with the formaldehyde source, and this condensation is advantageously carried out under appropriately acidic conditions (novolacs).

The amount of formaldehyde or aldehyde depends in general on the amount of hydroxyl-containing aromatic body. It is advantageously in the range from 0.5 to 0.8. It can also be of advantage not to allow the condensation of the product with formaldehyde to go to completion, (for example when the end product is applied by impregnating processes), and advantageously the formaldehyde fraction is then in the range from 0.25 to 0.5 and especially in the range from 0.27 to 0.48.

The reaction of the aldehyde or formaldehyde with the hydroxyl-containing aromatic body can be carried out in a conventional manner, advantageously at temperatures in the range from 50 to 110°C and preferably 80 to 105°C in a strongly acidic medium, for example at pH values below 3 and preferably below 1. Advantageously, the reaction with the aldehyde or formaldehyde or formaldehyde source is carried out in an aqueous acidic medium, and the aldehyde component can be added diluted with water and/or which can be diluted with water to a water content of advantageously 10% to 50% by weight.

If a sulphonation is to be carried out after the reaction of the aldehyde or formaldehyde of the hydroxyl-containing aromatic body, this generally requires the addition of an acid. This can be a strong inorganic acid or else a strong organic acid. The condensation after the sulphonation usually requires no additional acid.

The (sulphonated) condensation product obtained contains the sulphonic acid groups in the free acid form and is substantially free of cations, especially of polyvalent metal cations, chiefly heavy metal cations. In other words, if metal cations, especially polyvalent metal cations or heavy metal cations should be present in the mixture in traces, these trace amounts are essentially undesirable by-products as occur through use of certain vessels (transportation or reaction vessels) or other metal parts in the reaction apparatus, for example stirrer, fill funnel, etc., and are generally of the order of a few ppm and especially < 10 ppm in magnitude.

After sulphonation has taken place, the products obtained can be admixed with a suitable alkaline compound to the desired pH by reaction. The acidic condensation product obtained is to prepare aldehyde condensation product with a hydroxyl-containing aromatic body and mixed with a base, advantageously until the pH is above 2, especially until the pH of an aqueous dilution having a solids content of 10% by weight is above 3 and preferably above 9, more preferably in the range from 3 to 7. The alkaline compound or base used is chiefly selected from alkali metal hydroxides or carbonates (alkali metal = for example lithium, sodium or potassium), ammonia or aliphatic amines [for example morpholine, mono, di- or tri-(C₂₋₃-hydroxyalkyl)amine, mono-, di- or tri-(C₁₋₂-alkyl)amine]. The base used is preferably sodium hydroxide, potassium hydroxide or ammonia, it being a particularly preferred variant to use sodium hydroxide, potassium hydroxide and ammonia, advantageously in molar ratios of 0.2 to 10 and preferably 0.4 to 4 mol of KOH or/and NaOH per mole of ammonia. The products obtained (the aldehyde condensation products with a hydroxyl-containing aromatic body, which are optionally sulphonated) are water soluble and can be directly handled as-synthesized, optionally after adjustment of the water content to a solids content of for example 5 to 60% by weight and preferably 10 to 50% by weight, or they can if desired be dried to form dry products, for example by spray drying or granulating (optionally with addition of granulating auxiliaries).

If desired, for example to enhance ease of use in commercial practice, the solutions may be admixed with organic solvents, advantageously alcohols, chiefly aliphatic C₂₋₈-alcohols (especially ethanol, isopropanol and mono- or diethylene glycol and their C₁₋₄-alkyl monoethers, for example butylglycol).

Useful stabilizing reductants include enediols, which are known as reductones and have a powerful reducing action. Suitable reductones include for example (*R*)-5-[(*S*)-1,2-dihydroxyethyl]-3,4-dihydroxy-5*H*-furan-2-one (ascorbic acid, vitamin C) or (*R*)-5-((*R*)-1,2-dihydroxyethyl)-3,4-dihydroxy-5*H*-furan-2-one (isovitamin C, erythorbic acid, isoascorbic acid).

In a preferred embodiment, the stabilizing reductant is ascorbic acid.

The amounts of stabilizing reductants used (based on the ready-produced condensation product) range from 0.05% to 20% and preferably from 0.2% to 5%.

The reductants may be added to the finish the optionally sulphonation-solubilized aldehyde condensation product with a hydroxyl-containing aromatic body by simply mixing. The stabilizing reductants can be introduced at room temperature by stirring. Stirring is continued until a homogeneous mixture or solution has formed.

In a further embodiment, the finish the optionally sulphonation-solubilized aldehyde condensation product with a hydroxyl-containing aromatic body is additionally bleached before the reductant is mixed in. After bleaching, the stabilizing reductant can then in turn be added by simply mixing in. It is in principle also possible to bleach after the stabilizing reductant has been added.

Preferred bleaches are reducing agents. As reducing agents there may be used customary reductants which are usable in chemical reactions. There may be mentioned by way of example: hydrogen, activated hydrogen, metal hydrides such as sodium hydride, sodium borohydride or lithium aluminium hydride, reducing sulphur compounds such as sulphites with the exception of sodium sulphite, bisulphites with the exception of sodium bisulphite, hydrosulphites, pyrosulphites with the exception of sodium pyrosulphite, dithionites, thiosulphates, sulphoxylates, hydroxymethanesulphinates, sulphinates or thiourea dioxide, reducing phosphorus compounds such as phosphorous acid, hypophosphorous acid or salts thereof, and also organic reductants such as glucose, gluconic acid or hydroxyacetone.

Preferred bleaches are dithionites, especially sodium dithionite.

The amounts used of reducing agents (based on the ready-produced condensation product) range from 0.01% to 2% and preferably from 0.05% to 1%. The bleaching operation takes place during 10 minutes to 5 hours at 20 to 90°C with stirring.

The mixture of the invention exhibits little if any yellowing even after a very long storage period of for example three months or even a year. Similarly, fibre materials finished with the agent of the invention do not yellow and the colours of printed material is not affected. Similarly, the fibre materials dyed or printed with the agent of the invention do not yellow.

The non-yellowing dyeing auxiliary, which comprises an optionally sulphonation-solubilized aldehyde condensation product with a hydroxyl-containing aromatic body and a stabilizing reductant, serve to fix dyeings on fibre materials composed of natural or synthetic polyamide (for example wool, silk or synthetic polyamides, chiefly nylon 6 or 66), especially in the form of wovens, formed-loop knits and pile material, advantageously to finish upholstery cover material or carpets whose right side or (in the case of carpets) face side consists of such natural or/and synthetic polyamides or of polyamide-containing fibre blends. Preferred polyamide fibers are polyamid microfibers and polyamide fibers or polyamid microfibers blended with elastane fibers.

When fixing dyeings the temperatures can vary over a wide range for the exhaust process, for example in the range from 15 to 130°C (under superatmospheric pressure if appropriate) and advantageously 40 to 100°C. The additions and the exhaust process are advantageously controlled so that the pH of the exhaust liquor is in the range from 2.5 to 7 ant the end of the operation. A particular embodiment is carried out using a sliding pH; that is, the pH is lowered in the course of the exhaust process, advantageously in the range from pH 9 to 3, and especially so that a start is made with alkaline pH values, advantageously at pH 7.5 to 9 and preferably 8 to 9, and the pH is lowered to neutral or acidic values, advantageously pH 7 to 2.5 and preferably 6 to 3 in the course of the process. This can be effected for example through controlled addition of acid (for example of a low molecular weight aliphatic carboxylic acid especially of 1-4 carbon atoms, for example formic acid, acetic acid, lactic acid, oxalic acid, citric acid, malic acid, succinic acid or hydroxybutyric acid) or/and through addition of compounds which generate an acid in the course of the process, preferably by hydrolysis; such acid-generating compounds are for example saponifiable esters, chiefly of the abovementioned acids, particularly lactones of corresponding hydroxycarboxylic acids (e.g. butyrolactone), or labile chlorine compounds which generate hydrochloric acid in the course of the process by hydrolysis (for example 2,2-dichloropropanol or monochloroacetic acid) or chlorine-substituted esters - especially chloroacetic esters - for example as described in DE-A 28 03 309 (which corresponds to US Patent 4 168 142).

The impregnating process can be carried out according to any desired customary methods, for example by dipping, padding, spraying, foam application, knifecoating or roll application; the pH of the impregnating liquor for the impregnating process is (at least at the end of the impregnating process, the drying operation) advantageously in the range from 3 to 7 and preferably 3 to 6, and the impregnating process too can be carried out with a sliding pH when appropriate acid-generating compounds (particularly as indicated above) are added to the impregnating liquor, for which the pH at the start of the process is for example in the range from 6 to 8 and at the end of the process the pH is in the range from 3 to 6 and preferably 3 to 5. After impregnation, the impregnated material can be fixed by various methods, for example by dwelling at low temperature (according to the so-called cold pad-batch process) or else in the heat, for example in the temperature range from 15 to 102°C and in suitable variable time spans, for example in the range from 10 minutes to 48 hours (for example from several hours at room temperature to a few minutes at 102°C), or steaming for example at temperatures in the range from 95 to 140°C and preferably 100 to 110°C, or/and dry heat treatment (preferably at 130 to 160°C). Fixation is advantageously followed by rinsing and then drying. If appropriate (for example depending on the substrate, use level and fixing conditions), rinsing can be omitted.

The abovementioned mixtures and products have dye-fixing properties. The use of these fixatives leads to improved wetfastnesses for the prints and dyeings without the colour being affected. More particularly, no yellowing occurs. The preparations of the invention can be diluted with water. The water is preferably not above 50°C, a water temperature of 40°C being ideal. In principle, however, the water used for dilution can have a temperature in the range from room temperature to lukewarm.

To aftertreat dyed material, 0.1 % to 10% of the product of the invention are added to a new bath at 20 to 60°C and preferably to a bath having a temperature in the range from 30 to 50°C. It is preferable to add 0.5% to 5% of the agent of the invention. After homogenizing, an acid, preferably acetic acid or formic acid, can be added if necessary so that the pH is 4 or slightly less. This customarily takes 0.5% to 1% of acid. Thereafter, the bath is heated up, preferably not to above 85°C and more preferably not above 75°C. The preferred bath temperature is 70°C. The treatment of the previously thoroughly rinsed coloured material takes 10 to 30 minutes, and 15 to 20 minutes are preferred. This is followed by thorough rinsing.

The treatment in the cooled dyebath is perfectly possible but less preferable. It is preferred to rinse the dyed goods thoroughly with cold and warm water. Prior to this the goods may be rinsed with water comprising a usual tenside e.g. a polyglycol ether derivative.

Printed material can be aftertreated in a similar manner. However, in a preferred embodiment the printed goods are previousely washed and rinsed under basic conditions at a pH between 8,5 and 11,5, by preference at a pH between 9 and 11 thus at a pH around 10 with, optionally, a tenside which may be by way of example a polyglycol ether derivative.

Useful substrates include all customary anionic-dyeable, chiefly nitrogenous fibre materials, especially leather or fibre material composed of cationic-modified polyolefins, polyurethanes or natural or synthetic polyamides, among which in particular amide group containing fibre material, especially textile material composed of natural and/or synthetic polyamides is preferred, chiefly wool, silk, nylon 6, nylon 66, nylon 11, nylon 46, Qiana and mixtures thereof with each other or with elastomeric fibres. The substrates can be present in any desired form as customarily used for dyeing, especially from an aqueous medium, for example as loose fibres, threads, filaments, strands, bobbins, wovens, formed-loop knits, felts, nonwoven, velvet, carpets, tufted material and also intermediate or finished articles. The fibres can also have been treated mechanically and/or thermally, for example drawn or crimped, and it is also possible for blends of different fibres or else differently treated fibres (suitable for differential dyeing for example) to be used.

The substrates mentioned can be dyed according to any desired customary dyeing methods, especially according to exhaust processes from an aqueous liquor or by impregnating with aqueous liquors or preparations.

### Examples

### Preparation Example 1

100 parts of a sulphonated phenol-formaldehyde condensation product (Nylofixan MF2N fl k fixative, Clariant (Switzerland) AG) were mixed with 0.1 part of sodium dithionite and stirred at 50°C for 1 hour.

### Preparation Example 2

100 parts of a sulphonated phenol-formaldehyde condensation product (Nylofixan MF2N fl k fixative, Clariant (Switzerland) AG) were admixed with 0.5 part of ascorbic acid at room temperature and stirred until homogeneous.

### Preparation Example 3

100 parts of a sulphonated phenol-formaldehyde condensation product (Nylofixan MF2N fl k fixative, Clariant (Switzerland) AG) were initially mixed with 0.1 part of sodium dithionite, stirred at 50°C for 1 hour and, after cooling to room temperature, admixed with 0.5 part of ascorbic acid and stirred until homogeneous.

**Table 1: Comparison of colour of untreated fixative and of products of Preparation Example 1-3**

| | after preparation | after 3 months storage at room temperature | after 3 months storage at 50°C |
|---|---|---|---|
| Fixative (untreated) | 95 | >100 | >100 |
| Preparation Example 1 | 5 | 85 | >100 |
| Preparation Example 2 | 91 | >100 | >100 |
| Preparation Example 3 | 5 | 7 | 12 |

### Use Example 1

100 parts of a drawn-loop N 6,6 knit (Nylsuisse Artikel 2044) were treated in a laboratory dyeing machine (Zeltex Polycolor) with 2 000 parts of demineralized water and
a) without fixative
b) 3 parts of untreated fixative
c) 3 parts of product of Preparation Example 1
d) 3 parts of product of Preparation Example 2
e) 3 parts of product of Preparation Example 3
at 70°C for 20 minutes and thereafter adjusted to a pH of 4.0 to 4.5 with acetic acid.
The knit was rinsed cold and air dried.
The whiteness or Yellowing Index of the substrates was determined spectrophotometrically (see Table 2).

### Use Example 2

100 parts of a drawn-loop N 6,6 knit (Nylsuisse Artikel 2044) were dyed in a laboratory dyeing machine with a dye formulation containing 0.3 part of C.I. Acid Yellow 49 at a liquor ratio of 20:1 at pH 6 (set with acetic acid) at 98°C for 45 minutes, rinsed hot and cold and air dried.
The dyed knit was then treated in the laboratory dyeing machine as described above with 2 000 parts of demineralized water and
a) without fixative
b) 3 parts of untreated fixative
c) 3 parts of product of Preparation Example 1
d) 3 parts of product of Preparation Example 2
e) 3 parts of product of Preparation Example 3
at 70°C for 20 minutes and thereafter adjusted to a pH of 4.0 to 4.5 with acetic acid. The dyeing was rinsed cold and air dried. The total colour difference (CMC, Cielab 1976, D65/10) was determined colorimetrically (see Table 2).

### Use Example 3

100 parts of a drawn-loop N 6,6 knit (Nylsuisse Artikel 2044) were dyed in a laboratory dyeing machine with a dye formulation containing 1.7 parts of C.I. Acid Blue 72 at a liquor ratio of 20:1 at pH 6 (set with acetic acid) at 98°C for 45 minutes, rinsed hot and cold and air dried.
The dyed knit was then treated in the laboratory dyeing machine as described above with 2 000 parts of demineralized water and
a) without fixative
b) 3 parts of untreated fixative
c) 3 parts of product of Preparation Example 1
d) 3 parts of product of Preparation Example 2
e) 3 parts of product of Preparation Example 3
at 60°C for 20 minutes and thereafter adjusted to a pH of 4.0 to 4.5 with acetic acid.
The dyeing was rinsed cold and air dried.
Alkaline perspiration fastness (ISO E04) and also 60°C washfastness (ISO 105/C06 B2S) of the dyeings were determined colorimetrically to ISO A04 (staining of adjacent PA fabric (see Table 2).

**Table 2: Yellowing, influence on hue and fixing effect of untreated fixative and of products of Preparation Example 1-3**

| | Use Example 1 | | Use Example 2 | Use Example 3 | |
|---|---|---|---|---|---|
| | CIE whiteness | Yellowing Index | CMC | Perspiration ISO E04 | Wash B2S |
| a | 80.1 | 3.9 | - | 2.0 | 2.5 |
| b | 43.6 | 18.9 | 2.4 | 4.6 | 4.0 |
| c | 44.7 | 17.4 | 1.8 | 4.5 | 3.9 |
| d | 57.5 | 12.6 | 2.2 | 4.5 | 3.7 |
| e | 74.8 | 5.5 | 0.2 | 4.5 | 3.9 |

## Claims

1. A storage-stable and non-yellowing composition comprising an aldehyde condensation product of 4,4'-dihydroxydiphenyl sulfones or phenol and a reductant **characterized in that** the reductant is ascorbic acid or isoascorbic acid.

2. The composition according to claim 1, **characterized in that** the reductant is ascorbic acid.

3. A process for preparing a storage-stable, non-yellowing composition comprising the step of providing a solution of an aldehyde condensation product of 4,4'-dihydroxydiphenyl sulfones or phenol and admixing a stabilizing reductant to it **characterized in that** the stabilizing reductant is ascorbic acid or isoascorbic acid.

4. The process according to claim 3, **characterized in that** the addition of the reductant is preceded or followed by the addition of a further reductant and the aldehyde condensation product is stirred together with the further reductant.

5. The process according to claim 3 or 4, **characterized in that** the further reductant is a dithionite.

6. Use of a composition according to claims 1 or 2 or of a composition obtainable by a process according to claims 3 to 5 for dye fixing of natural or synthetic polyamide fiber materials.

## Patentansprüche

1. Lagerstabile und nicht vergilbende Zusammensetzung enthaltend ein Aldehydkondensationsprodukt von 4,4'-Dihydroxydiphenylsulfonen oder Phenol und ein Reduktionsmittel, **dadurch gekennzeichnet, dass** das Reduktionsmittel Ascorbinsäure oder Isoascorbinsäure ist.

2. Zusammensetzung gemäss Anspruch 1 **dadurch gekennzeichnet, dass** das Reduktionsmittel Ascorbinsäure ist.

3. Verfahren zum Herstellen einer lagerstabilen, nicht vergilbenden Zusammensetzung umfassend den Schritt der Bereitstellung einer Lösung eines Aldehydkondensationsprodukts von 4,4'-Dihydroxydiphenylsulfonen oder Phenol und des Zumischens eines stabilisierenden Reduktionsmittels, **dadurch gekennzeichnet, dass** das stabilisierende Reduktionsmittel Ascorbinsäure oder Isoascorbinsäure ist.

4. Verfahren gemäss Anspruch 3, **dadurch gekennzeichnet, dass** vor oder nach der Zugabe des stabilisierenden Reduktionsmittels ein weiteres Reduktionsmittel zugegeben wird und das Aldehydkondensationsprodukt zusammen mit dem weiteren Reduktionsmittel gerührt wird.

5. Verfahren gemäss Anspruch 3 oder 4, **dadurch gekennzeichnet, dass** das weitere Reduktionsmittel ein Dithionit ist.

6. Verwendung einer Zusammensetzung gemäss den Ansprüchen 1 oder 2 oder einer Zusammensetzung herstellbar durch das Verfahren gemäss den Ansprüchen 3 bis 5 zum Fixieren von natürlichen oder synthetischen Polyamidfasermaterialien.

## Revendications

1. Composition stable au stockage et ne jaunissant pas comprenant un produit de condensation d'un aldéhyde et de 4,4'-dihydroxydiphénylsulfones ou de phénol et un réducteur, **caractérisée en ce que** le réducteur est l'acide ascorbique ou l'acide isoascorbique.

2. Composition selon la revendication 1, **caractérisée en ce que** le réducteur est l'acide ascorbique.

3. Procédé de préparation d'une composition ne jaunissant pas, stable au stockage, comprenant l'étape consistant à se procurer une solution d'un produit de condensation d'un aldéhyde et de 4,4'-dihydroxydiphényl-sulfones ou de phénol et à y incorporer un réducteur stabilisant, **caractérisé en ce que** le réducteur stabilisant est l'acide ascorbique ou l'acide isoascorbique.

4. Procédé selon la revendication 3, **caractérisé en ce que** l'addition du réducteur est précédée ou suivie de l'addition d'un autre réducteur et le produit de condensation d'un aldéhyde est agité en même temps que l'autre réducteur.

5. Procédé selon la revendication 3 ou 4, **caractérisé en ce que** l'autre réducteur est un dithionite.

6. Utilisation d'une composition selon les revendications 1 ou 2 ou d'une composition susceptible d'être obtenue par un procédé selon les revendications 3 à 5 pour la fixation d'un colorant sur des matières fibreuses en polyamide naturel ou synthétique.
